Europäisches Patentamt

European Patent Office

Office européen des brevets

(19)

(11) Veröffentlichungsnummer: **0 316 824 B1**

(12) **EUROPÄISCHE PATENTSCHRIFT**

(45) Veröffentlichungstag der Patentschrift: **24.06.92**

(51) Int. Cl.5: **A01B 15/14**

(21) Anmeldenummer: **88118891.6**

(22) Anmeldetag: **12.11.88**

(54) **Rohrförmiger Pflugrahmen.**

(30) Priorität: **18.11.87 DE 8715283 U**

(43) Veröffentlichungstag der Anmeldung:
**24.05.89 Patentblatt 89/21**

(45) Bekanntmachung des Hinweises auf die
Patenterteilung:
**24.06.92 Patentblatt 92/26**

(84) Benannte Vertragsstaaten:
**AT CH DE ES FR GB LI NL SE**

(56) Entgegenhaltungen:
**DE-A- 2 024 951**
**GB-A- 2 192 774**

(73) Patentinhaber: **H. Niemeyer Söhne GmbH &
Co. KG**
**Heinrich-Niemeyer-Strasse 52**
**W-4446 Hörstel-Riesenbeck(DE)**

(72) Erfinder: **Barlage, Bruno, Dipl.-Ing.**
**Beethovenstrasse 13**
**W-4446 Hörstel(DE)**

(74) Vertreter: **Busse & Busse Patentanwälte**
**Postfach 1226 Grosshandelsring 6**
**W-4500 Osnabrück(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 316 824 B1

## Beschreibung

Die Erfindung bezieht sich auf einen rohrförmigen Pflugrahmen für mehrscharige Pflüge, der aus U-förmigen, untereinander an den freien Randkanten ihrer Schenkel verschweißten Formteilen besteht.

Bei einem bekannten Pflugrahmen dieser Art (DE-PS 20 24 951) sind die Schenkel der Formteile horizontal ausgerichtet. Der Pflugrahmen setzt sich aus mehreren Abschnitten von untereinander verschweißten Formteilen zusammen, die an ihren Stirnenden mit Anschlußplatten für eine Schraubverbindung versehen sind. Im vorderen Bereich eines jeden Rahmenabschnitts haben die Formteile einen über die Länge dieses Bereiches unveränderten Querschnitt. An diesen Bereich unveränderten Querschnitts schließt sich ein U-förmiges Sonderpreßteil mit in bezug auf die Fahrtrichtung von vorne nach hinten sich keilförmig verbreiternden Schenkeln an, um in den Pflugrahmen integrierte Befestigungsmittel für die Grindel von Pflugkörpern zu bilden.

Der Erfindung liegt die Aufgabe zugrunde, einen besonders einfachen, preisgünstig herstellbaren und hohen Belastungen gewachsenen Pflugrahmen zu schaffen. Die Erfindung löst diese Aufgabe durch einen rohrförmigen Pflugrahmen mit den Merkmalen des Anspruchs 1. Hinsichtlich wesentlicher weiterer Ausgestaltungen wird auf die Ansprüche 2 bis 8 verwiesen.

Der rohrförmige Pflugrahmen nach der Erfindung weist in Fahrtrichtung gesehen eine stetige Querschnittszunahme in der Höhe auf und bildet einen Träger mit in vertikaler Ebene gleicher Biegebeanspruchung. Er ist insbesondere auch bei einer bevorzugten Ausbildung der Formteile mit Mittelstegen von über die Länge des Pflugrahmens gleichbleibender Breite besonders einfach aus Flachblech herstellbar, wodurch im Gegensatz zu üblichen Walzprofilen eine breite, auch hochwertige Stähle einschließende Materialauswahl zur Verfügung steht und die Möglichkeit zur Vorgabe feingestufter Wandstärken besteht. Bezogen auf seine Festigkeit ist der erfindungsgemäße Pflugrahmen daher besonders leicht. Er ist auch durch einfache Biege- und Schweißarbeiten günstig herstellbar.

Weitere Einzelheiten und Vorteile ergeben sich aus der nachfolgenden Beschreibung und der Zeichnung, in der ein Ausführungsbeispiel des Gegenstands der Erfindung näher veranschaulicht ist. In der Zeichnung zeigen:

Fig. 1 eine schematische Seitenansicht eines Drehpfluges mit einem Pflugrahmen nach der Erfindung,

Fig. 2 eine abgebrochene Seitenansicht des vorderen Pflugrahmenbereiches in Vergrößerung, und

Fig. 3 eine Draufsicht auf einen Abschnitt eines Pflugrahmens im Bereich eines Auslegers für die Grindelbefestigung.

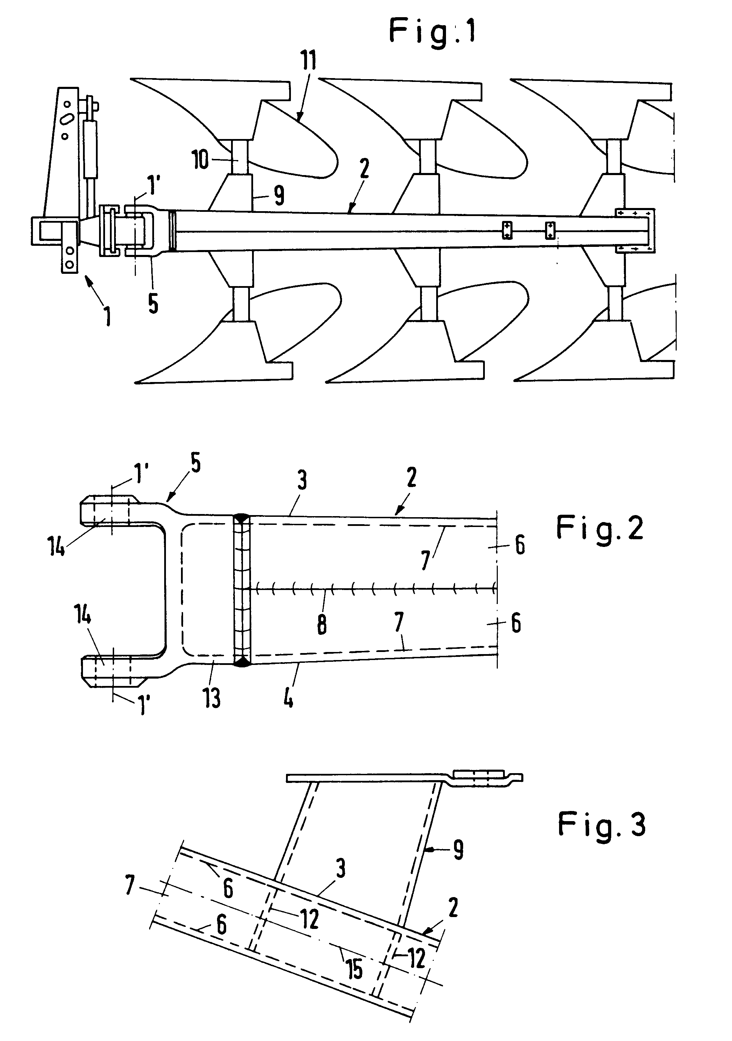

Der in Fig. 1 veranschaulichte, lediglich beispielsweise als Drehpflug ausgebildete Pflug umfaßt im einzelnen ein Pflugvordergestell 1, mit dem ein Pflugrahmen 2 um eine in Arbeitsstellung des Pfluges etwa lotrechte Gelenkachse 1' schwenkbar verbunden ist.

Der Pflugrahmen 2 hat eine rohrförmige Grundgestalt und besteht aus zwei U-förmigen Formteilen 3,4, die eine untereinander gleiche Ausbildung haben, sowie aus einem gabelförmigen Gelenkanschlußkopf 5. Die U-förmigen Formteile 3,4 weisen jeweils Schenkel 6 auf, die sich in Fahrtrichtung, d.h. vom rückwärtigen Ende zum vorderen Ende des Pflugrahmens 2 hin, stetig verbreitern und dabei in Arbeitsstellung des Pflugrahmens horizontal verlaufen, so daß der Pflugrahmen 2 ein Querschnittsprofil aufweist, dessen Höhe sich in Fahrtrichtung vergrößert.

Die Mittelstege 7 der Formteile 3,4 haben bevorzugt eine über die Länge des Pflugrahmens 2 gleichbleibende Breite, so daß bei einheitlicher Wanddicke der Formteile 3,4 der Pflugrahmen 2 über seine Länge in der Breite unverändert bleibt.

Die Formteile 3,4 sind bevorzugt aus formgebogenen bzw. abgekanteten Flachblechzuschnitten gebildet, die über die Länge des Pflugrahmens 2 einstückig sind.

Die Formteile 3,4 sind an den freien Randkanten ihrer Schenkel 6 untereinander durch eine Schweißnaht 8 verbunden, die als gerade, durchgehende Naht sehr einfach zu erstellen ist. Vor dem Verschweißen der Formteile 3,4 können im Bereich der Ausleger 9 für die Befestigung von Grindeln 10 von Pflugkörpern 11 in den Formteilen 3,4 Querwände 12 eingeschweißt werden, die Ausbeulerscheinungen unter Belastung entgegenwirken.

Der Gelenkanschlußkopf 5 am vorderen Rahmenende weist ein kastenförmiges rückwärtiges Anschlußteil 13 auf, dessen rückwärtiger Rand den vorderen Rändern der Formteile 3,4 fluchtend gegenüberliegt und mit diesen durch eine umlaufende V-Schweißnaht verbunden ist. Bei dieser Gestaltung schneidet die durch die Aufnahmebohrungen 14 des Gelenkanschlußkopfes 5 definierte Gelenkachse 1' die Mittelachse 15 des Pflugrahmens 2.

## Patentansprüche

1. Rohrförmiger Pflugrahmen für mehrscharige Pflüge, der aus U-förmigen, untereinander an den freien Randkanten ihrer Schenkel (6) verschweißten Formteilen (3,4) besteht, **dadurch gekennzeichnet,** daß die Schenkel (6) der Formteile (3,4) in Arbeitsstellung des Pflugrahmens (2) eine vertikale Ausrichtung aufweisen und sich in Fahrtrichtung vom rückwärtigen Ende des Pflugrahmens (2) zum vorderen Ende hin stetig verbreitern.

2. Pflugrahmen nach Anspruch 1, **dadurch gekennzeichnet,** daß die Formteile (3,4) Mittelstege (7) von über die Länge des Pflugrahmens (2) gleichbleibender Breite aufweisen.

3. Pflugrahmen nach Anspruch 1 oder 2, **dadurch gekennzeichnet,** daß die Formteile (3,4) des Pflugrahmens (2) eine untereinander gleiche Gestalt aufweisen.

4. Pflugrahmen nach einem der Ansprüche 1 bis 3, **dadurch gekennzeichnet,** daß die Formteile (3,4) sich einstückig über die Länge des Pflugrahmens erstrecken.

5. Pflugrahmen nach einem der Ansprüche 1 bis 4, **dadurch gekennzeichnet,** daß die Formteile (3,4) im Bereich der Schenkel (6) und des Mittelsteges gleiche Wanddicken aufweisen.

6. Pflugrahmen nach einem der Ansprüche 1 bis 5, **dadurch gekennzeichnet,** daß die Formteile (3,4) aus formgebogenen Flachblechzuschnitten gebildet sind.

7. Pflugrahmen nach einem der Ansprüche 1 bis 6, **dadurch gekennzeichnet,** daß im Bereich der Ausleger (9) für die Befestigung von Grindeln (10) von Pflugkörpern (11) die Formteile (3,4) durch eingeschweißte Querwände (12) ausgesteift sind.

8. Pflugrahmen nach einem der Ansprüche 1 bis 7, mit einem gabelförmigen Gelenkanschlußkopf (5) am vorderen Rahmenende, der ein kastenförmiges, dem Rohrteil des Pflugrahmens (2) zugewandtes Anschlußteil (13) aufweist, **dadurch gekennzeichnet,** daß der rückwärtige Rand des Anschlußteils (13) und der vordere Rand des von den Formteilen (3,4) gebildeten Rohrteils des Pflugrahmens (2) in einander gegenüberliegender Anordnung durch eine umlaufende V-Schweißnaht verbunden sind.

## Claims

1. A tubular plough frame for multi-share ploughs and consisting of U-shaped parts (3, 4) welded to one another along the free edges of their side members (6), characterised in that the side members (6) of the shaped parts (3, 4) are in a vertical orientation when the plough frame (2) is in the working position and in that they widen out steadily from the rear end of the plough frame (2) to the front end, in the direction of travel.

2. A plough frame according to claim 1, characterised in that the shaped parts (3, 4) have central webs (7) of a width which remains constant over the length of the plough frame (2).

3. A plough frame according to claim 1 or 2, characterised in that the shaped parts (3, 4) of the plough frame (2) are all shaped the same as one another.

4. A plough frame according to one of claims 1 to 3, characterised in that the shaped parts (3, 4) extend in one piece over the length of the plough frame.

5. A plough frame according to one of claims 1 to 4, characterised in that in the region of the side members (6) and of the middle web, the shaped parts (3, 4) all have the same wall thickness.

6. A plough frame according to one of claims 1 to 5, characterised in that the shaped parts (3, 4) are formed from flat sheet metal blanks which are bent to shape.

7. A plough frame according to one of claims 1 to 6, characterised in that the shaped parts (3, 4) are strengthened by welded-in transverse walls (12) in the region of the arms (9) for mounting of beams (10) of ploughshares (11).

8. A plough frame according to one of claims 1 to 7, with a bifurcated hinged connection head (5) at the front end of the frame and comprising a box-shaped connection part (13) which is towards the tubular part of the plough frame (2), characterised in that the rear edge of the connection part (13) and the front edge of the tubular part of the plough frame (2) which is formed by the shaped parts (3, 4) are connected in a mutually opposite arrangement by an encircling V-weld seam.

## Revendications

1. Age tubulaire de charrue pour une charrue à versoirs multiples, âge composé de pièces formées (3, 4) en U, soudées entre elles suivant le bord libre de leur branche (6), âge caractérisé en ce que les branches (6) des pièces formées (3, 4) sont verticales lorsque l'âge (2) est en position de travail et ces branches vont en s'élargissant de l'extrémité arrière de l'âge (2) vers l'extrémité avant, de manière continue, par rapport à la direction de déplacement.

2. Age de charrue selon la revendication 1, caractérisé en ce que les pièces formées (3, 4) ont des membrures (7) de largeur constante sur toute la longueur de l'âge de charrue (2).

3. Age de charrue selon la revendication 1 ou 2, caractérisé en ce que les pièces formées (3, 4) de l'âge (2) ont une forme identique.

4. Age de charrue selon l'une des revendications 1 à 3, caractérisé en ce que les pièces formées (3, 4) s'étendent en une seule partie sur toute la longueur de l'âge de charrue.

5. Age de charrue selon l'une des revendications 1 à 4, caractérisé en ce que les pièces formées (3, 4) ont la même épaisseur de paroi au niveau de leurs branches (6) et de leur âme.

6. Age de charrue selon l'une des revendications 1 à 5, caractérisé en ce que les pièces formées (3, 4) sont constituées par des éléments de fers plats cintrés.

7. Age de charrue selon l'une des revendications 1 à 6, caractérisé en ce qu'au niveau du bras (9) de fixation des étançons (10) des versoirs (11), les pièces formées (3, 4) sont renforcées par des membrures (12) soudées.

8. Age de charrue selon l'une des revendications 1 à 7 comportant une tête d'attelage articulée (5) en forme de fourche à l'extrémité avant de l'âge avec une pièce de raccordement (13) en forme de caisson, tournée vers la pièce tubulaire de l'âge de charrue (2), caractérisé en ce que la paroi arrière de la pièce de raccordement (13) et la paroi avant de la partie de tube de l'âge de charrue (2), partie formée par le bord avant des pièces formées (3, 4), sont reliées bout à bout par un cordon de soudure, périphérique à section en V.

# Fig.1

# Fig.2

# Fig.3